# EUROPEAN PATENT SPECIFICATION

(11) **EP 2 915 410 B1**
(45) Date of publication and mention of the grant of the patent: **22.01.2020**
(21) Application number: 13774540.2
(22) Date of filing: 19.09.2013
(51) Int. Cl.: H05B 6/10, H05B 6/14, B44C 1/10, B44C 1/17, B29C 63/00

(54) **APPARATUS FOR HEATING A MATERIAL**
VORRICHTUNG ZUR ERWÄRMUNG EINES MATERIALS
APPAREIL PERMETTANT DE CHAUFFER UN MATÉRIAU

(30) Priority: 01.11.2012 US 201213665969
(43) Date of publication of application: 09.09.2015
(73) Proprietor: The Boeing Company, Chicago, IL 60606-1596 (US)
(72) Inventor: MILLER, Robert James, Chicago, IL 60606 (US); RAWLINGS, Diane C., Chicago, IL 60606 (US)
(74) Representative: Howson, Richard Giles Bentham
(86) International application number: PCT/US2013/060534
(87) International publication number: WO 2014/070327

(56) References cited:
- US-A- 3 575 772
- US-A- 3 616 176
- US-A- 6 070 046
- US-A1- 2003 086 736
- US-A1- 2006 289 420
- US-A1- 2011 155 721

## Description

### BACKGROUND

The field of the disclosure relates generally to induction heating, and more specifically, to methods and an apparatus for heating a material.

Adhesive-based materials, or appliqués, are widely used for both decoration and protection of various surfaces. For example, appliqués may be used on various types of vehicles such as automobiles, aircraft, and/or boats. At least some known appliqués require a uniform adhesion to an installation surface to prevent wrinkles, tears, bubbles, and/or creases. However, known methods of appliqué installation involving applying pressure with fingertips or with a scraper, are generally time-consuming and labor intensive processes. Moreover, such methods may be particularly difficult for some applications, such as with aircraft surfaces that are commonly studded with fasteners, such as, for example, rivets, screws, and the like, which have heads that protrude above the aircraft surface. Such protrusions may create bubbles in the appliqué which may be unacceptable according to the specification requirements of the appliqué. Moreover, the protrusions may make it difficult to apply uniform pressure to the appliqué to ensure correct bonding of the appliqué's adhesive backing to the aircraft surface.

Moreover, some appliqués may require specific temperature ranges for proper adhesion to the installation surface. As such, it may be difficult to make quick repairs without moving the installation surface into a controlled environment. To prevent from moving the surface into a controlled environment, at least some known methods use a heat gun to warm the installation surface before the appliqué is applied. However, such methods do not enable temperature control, and as such, a user cannot know whether the surface is too hot or too cold, which may result in poor adhesion of the appliqué to the installation surface.

US3575772A discloses a handheld device for heating a material, said device comprising: a roller; and a handle for enabling a user to grasp or hold the device.

### SUMMARY

In an aspect there is provided a handheld device as defined in claim 1.

### DRAWINGS

Fig. 1 is a perspective view of an exemplary heating apparatus.
Fig. 2 is an enlarged cross-sectional view of an exemplary roller that may be used with the heating apparatus shown in Fig. 1.
Fig. 3 is a perspective view of exemplary induction coils that may be used with the heating apparatus shown in Fig. 1.
Fig. 4 illustrates a flowchart of an exemplary method of heating a material using the roller shown in Fig. 1.
Fig. 5 illustrates a flowchart of an exemplary method of installing an applique.
Fig. 6 is a flow diagram of aircraft production and service methodology.
Fig. 7 is a block diagram of an aircraft.

### DETAILED DESCRIPTION

As used herein, an element or step recited in the singular and proceeded with the word "a" or "an" should be understood as not excluding plural elements or steps unless such exclusion is explicitly recited. Furthermore, references to "one implementation" of the present invention or the "exemplary implementation" are not intended to be interpreted as excluding the existence of additional implementations that also incorporate the recited features.

The exemplary methods and apparatus described herein relate to using induction heating to heat a material. In general, the exemplary implementations generate a magnetic field using an induction coil coupled to a roller. The magnetic field induces eddy currents in susceptors contained in the roller to generate heat. As a result, a temperature controlled heating apparatus is provided that is accurate and convenient for a user.

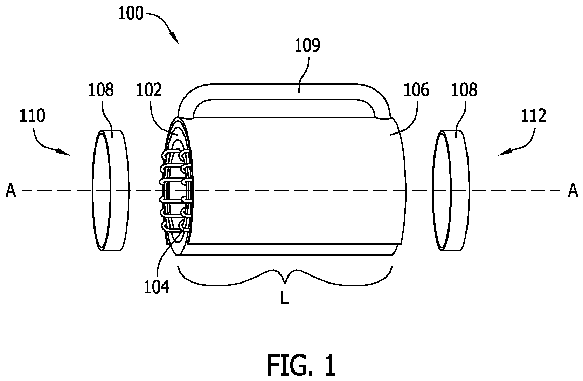

Fig. 1 is a perspective view of an exemplary heating apparatus 100. In the exemplary implementation, heating apparatus 100 includes a roller 102 coupled to at least one induction coil 104. Moreover, in the exemplary implementation, heating apparatus 100 also includes a housing 106 and end caps 108 that facilitate shielding the components in heating apparatus 100 from their surroundings. The heating apparatus 100 also includes a handle 109 for enabling a user to grasp or hold heating apparatus 100.

In the exemplary implementation, roller 102 is a hollow cylindrical body that is rotatable about its longitudinal axis A-A. Roller 102 has a length L and is formed of a non-electrically conductive material. In the exemplary implementation, roller 102 is a handheld device that is easily portable. Moreover, in the exemplary implementation, roller 102 has a length L between 4 inches (1 inch = 2.54 cm) and 8 inches. In other implementations, roller 102 may have any length L that enables roller 102 to function as described herein. In the exemplary implementation, roller 102 has sufficient flexibility in an axial direction to enable flexible contact with a surface (not shown in Fig. 1) being heated.

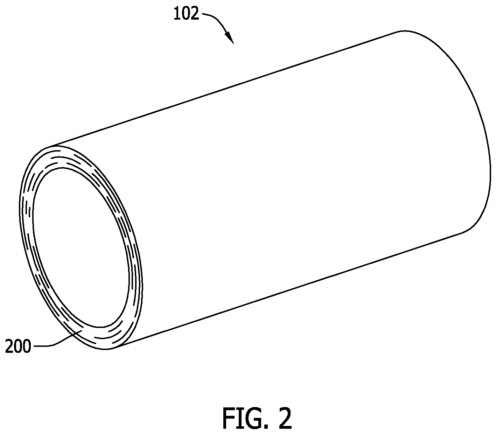

Fig. 2 is an enlarged cross-sectional view of roller 102 that may be used with heating apparatus 100 (shown in Fig. 1). In the exemplary implementation, roller 102 includes electrically-conductive susceptors 200 contained therein. Susceptors 200 may be continuous or discontinuous, and may extend circumferentially about roller 102. The susceptors 200 are smart susceptor wires fabricated from magnetic alloys that generate heat efficiently until a threshold or Curie temperature is obtained. Heat is generated by eddy currents that flow on one surface and return on the other surface of susceptors 200. The heat is generated by eddy currents in the susceptors which tend to flow on one surface of the susceptor and return on the other surface. The frequency of the magnetic field is supplied by induction coil 104. A diameter and magnetic permeability of susceptors 200 are selected such that an electrical skin depth of the current is smaller than the diameter of susceptors, which enables relatively high currents and high resistive heating. Heating decreases to near zero when the Curie point of susceptors 200 is approached. Moreover, the permeability decreases to about one, which increases the skin depth to larger than the diameter of susceptors 200 to maintain temperature at the Curie point. For example, a susceptor having a permeability of 300, an electrical conductivity of 1,000,000 mhos/m in a magnetic field of 300Hz would have a skin depth of 0.002 inches. In this example, the susceptor diameter should be greater than (two to four times greater for efficient heating) 0.004inch. When the temperature of this example susceptor approaches the Curie point and the permeability decreases to about one, then the skin depth increases to approximately 0.03 inches, which is greater than the diameter. Thus, the eddy currents and heat decrease to near zero.

As portions of smart susceptors 200 are heated to the Curie temperature, the magnetic permeability of those portions is reduced, thus limiting generation of heat by those portions at the Curie temperature. Susceptors 200 are variably selected to have a Curie temperature that is appropriate for each individual application. In the exemplary implementation, when a desired maximum operating temperature of heating apparatus 100 is known, a diameter of susceptors 200 may be calculated to achieve a particular Curie temperature for susceptors 200. Moreover, the frequency required to reach a particular Curie temperature is at least partially dependent on the diameter of susceptors 200. For example, smaller diameter of susceptors 200 reduces the weight of heating apparatus 100, and generally operates at higher frequencies.

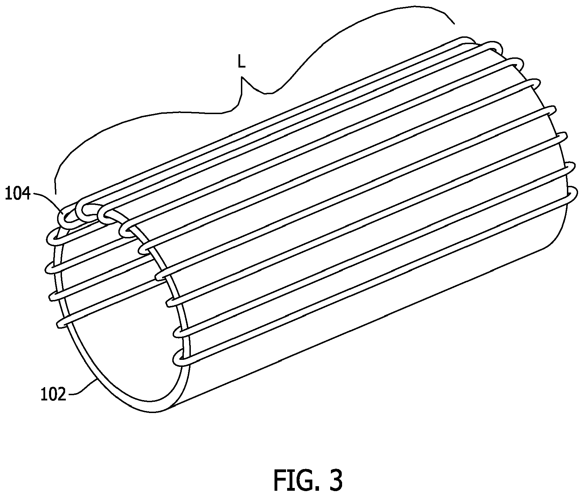

Fig. 3 is a perspective view of exemplary induction coils 104 that may be used with heating apparatus 100 (shown in Fig. 1). In the exemplary implementation, at least one induction coil 104 is coupled to roller 102 (shown in Fig. 1 and 2). More specifically, in the exemplary implementation, induction coil 104 is operatively wound longitudinally about roller 102. Induction coil 104 is fixed relative to roller 102, such that roller 102 is freely rotatable within induction coil 104. Induction coil 104 includes a conventional winding of electrical wires that form a flattened solenoid that is formed in a cylindrical shape. Each winding of induction coil 104 extends length L of roller 102. In the exemplary implementation, induction coil 104 is operatively wound about 80% of a circumference of roller 102. Induction coil 104 induces a magnetic field in roller 102 that heats susceptors 200 as is described in more detail herein.

Induction coil 104 is coupled to a power supply (not shown) to enable electrical current to be generated in induction coil 104. The current induces a magnetic field in roller 102. More specifically, in the exemplary implementation, the power supply supplies a high-frequency electric current to induction coil 104. More specifically, in the exemplary implementation, the power supply supplies an alternating current within a range of approximately 10 kHz to 4 MHz.

In some implementations, housing 106 may be coupled about induction coil 104 to facilitate shielding a user from magnetic fields produced by induction coil 104. Housing may be fabricated from a ferrite or magnetic metal cladding coupled about an outer surface of induction coil 104. End caps 108 may also be coupled to each end 110 and 112 (shown in Fig. 1) of heating apparatus 100 to facilitate protecting the user and also to protect the components inside heating apparatus 100. End caps 108 may also enable electrical coupling to the power supply and/or function as bearings for roller 102.

During operation, in the exemplary implementation, the power supply generates electrical current in induction coil 104, which induces a magnetic field in the interior of roller 102. More specifically, induction coil 104 induces eddy currents in susceptors 200 causing susceptors 200 to increase in temperature until susceptors 200 reach their Curie temperature.

As heating apparatus 100 is traversed, i.e., rolled, along an installation surface (not shown), portions of roller 102 within induction coil 104 are continuously reheated to maintain the Curie temperature required for the particular application. As roller 102 is moved out of induction coil 104 and contacts the installation surface, roller 102 transfers heat to the surface. By the time the temperature of a portion of roller 102 external to induction coil 104 starts to lower, that portion reenters the area within induction coil 104 to be reheated. Overheating of heating apparatus 100 is prevented by the Curie temperature intrinsic to susceptors 200. Underheating is prevented by operating roller 102 at or below a predefined rotational speed for the specific application.

Although described herein as being used to heat an appliqué for installation on a surface, heating apparatus may also be used to facilitate appliqué removal. Appliqués are designed to stay on surfaces regardless of the environment they are used in. However, heating apparatus 100 may be used to heat the adhesive used to secure these appliqués to a high enough temperature such that the appliqués may be peeled off the surface.

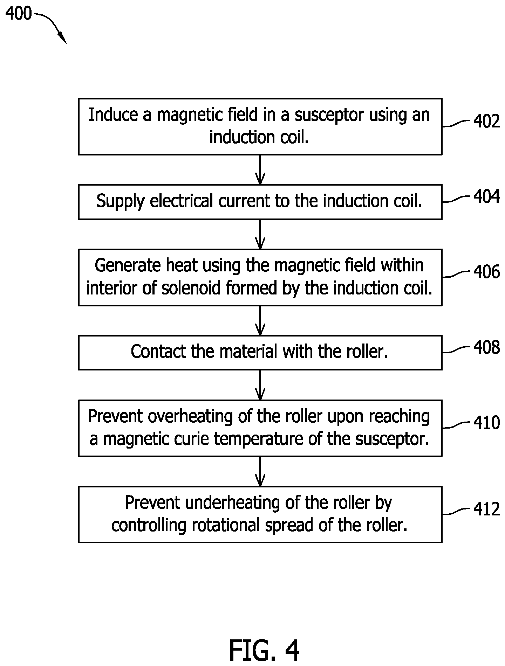

Fig. 4 illustrates a flowchart 400 of an exemplary method of heating a material using roller 102 (shown in Fig. 1). Initially, a magnetic field is induced 402 in at least one susceptor 200 (shown in Fig. 2) contained in roller 102 (shown in Figs. 1 and 2) using at least one induction coil 104 (shown in Figs. 1 and 2) that is coupled to roller 102. More specifically, induction coil 104 is used to induce eddy currents in susceptors 200.

In the exemplary implementation, as eddy currents are induced in susceptors 200, electrical current is supplied 404 to induction coil 104 and heat is generated 406 from the magnetic field within the interior of a solenoid formed by induction coil 104. The material is contacted 408 with roller 102. In the exemplary implementation, the method also includes preventing 410 overheating of roller 102 after a Curie temperature of the at least one susceptor 200 is obtained, and preventing 412 underheating of roller 102 by controlling a rotational speed of roller 102.

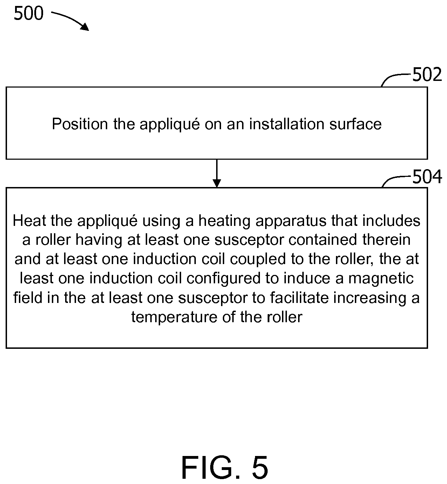

Fig. 5 illustrates a flowchart 500 of an exemplary method of installing an appliqué. Initially, an appliqué is positioned 502 on an installation surface. The appliqué includes an adhesive for adhering to the installation surface.

In the exemplary implementation, after the appliqué is positioned, the appliqué is heated 504 using a heating apparatus that includes a roller having at least one susceptor contained therein and at least one induction coil coupled to the roller, the at least one induction coil configured to induce a magnetic field in the at least one susceptor to facilitate increasing a temperature of the roller. In one implementation, heating the appliqué includes supplying electrical current to the at least one induction coil, generating heat using the magnetic field within the interior of a solenoid formed by the induction coil, and contacting the appliqué with the heating apparatus to heat the adhesive. In another implementation, heating the appliqué includes heating the appliqué to a predetermined temperature using the heating apparatus.

In the exemplary implementation, the method of installing an appliqué may further include rolling the heating apparatus about the appliqué to induce adhesion of the appliqué to the installation surface.

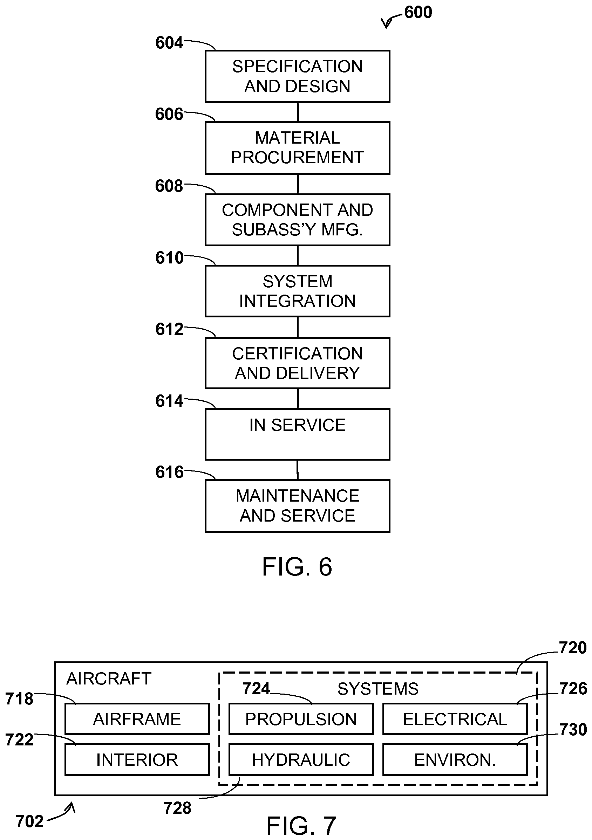

Referring more particularly to the drawings, embodiments of the disclosure may be described in the context of an aircraft manufacturing and service method 600 as shown in Fig. 6 and an aircraft 702 as shown in Fig. 7. During pre-production, exemplary method 600 may include specification and design 604 of the aircraft 702 and material procurement 606. During production, component and subassembly manufacturing 608 and system integration 610 of the aircraft 702 takes place. Thereafter, the aircraft 702 may go through certification and delivery 612 in order to be placed in service 614. While in service by a customer, the aircraft 702 is scheduled for routine maintenance and service 616 (which may also include modification, reconfiguration, refurbishment, and so on).

Each of the processes of method 600 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

As shown in Fig. 7, the aircraft 702 produced by exemplary method 600 may include an airframe 718 with a plurality of systems 720 and an interior 722. Examples of high-level systems 720 include one or more of a propulsion system 724, an electrical system 726, a hydraulic system 726, and an environmental system 730. Any number of other systems may be included. Although an aerospace example is shown, the principles of the invention may be applied to other industries, such as the automotive industry.

Apparatus and methods embodied herein may be employed during any one or more of the stages of the production and service method 600. For example, components or subassemblies corresponding to production process 608 may be fabricated or manufactured in a manner similar to components or subassemblies produced while the aircraft 702 is in service. Also, one or more apparatus embodiments, method embodiments, or a combination thereof may be utilized during the production stages 608 and 610, for example, by substantially expediting assembly of or reducing the cost of an aircraft 702. Similarly, one or more of apparatus embodiments, method embodiments, or a combination thereof may be utilized while the aircraft 702 is in service, for example and without limitation, to maintenance and service 616.

The description of the different advantageous implementations has been presented for purposes of illustration and description, and is not intended to be exhaustive or limited to the implementations in the form disclosed. Many modifications and variations will be apparent to those of ordinary skill in the art. Further, different advantageous implementations may provide different advantages as compared to other advantageous implementations. The implementation or implementations selected are chosen and described in order to best explain the principles of the implementations, the practical application, and to enable others of ordinary skill in the art to understand the disclosure for various implementations with various modifications as are suited to the particular use contemplated. This written description uses examples to disclose various implementations, which include the best mode, to enable any person skilled in the art to practice those implementations, including making and using any apparatuses or systems and performing any incorporated methods. The patentable scope is defined by the claims.

## Claims

1. A handheld device for heating a material, said device comprising:
a roller (102); and a handle for enabling a user to grasp or hold the device;
the handheld device being **characterised in that** the roller comprises a plurality of smart susceptor wires (200) contained therein, wherein the operating temperature of said roller (102) is limited by the Curie temperature intrinsic to said smart susceptor wires (200); and **in that** the handheld device comprises at least one induction coil (104) coupled to said roller (102), said at least one induction coil (104) being configured to induce a magnetic field in said susceptor wires (200) to facilitate increasing a temperature of said roller (102).

2. A device in accordance with any of the preceding claims, wherein said susceptor wires (200) comprise at least one continuous susceptor wire that extends circumferentially within said roller (102).

3. A device in accordance with any of the preceding claims, wherein said susceptor wires (200) comprise at least one discontinuous susceptor wire that extends circumferentially within said roller (102).

4. A device in accordance with any of the preceding claims, wherein said roller (102) comprises a hollow cylindrical body.

5. A device in accordance with Claim 4, wherein said induction coil (104) is wound longitudinally about said roller (102).

6. A device in accordance with any of the preceding claims, wherein said induction coil (104) forms a solenoid.

7. A device in accordance with any of the preceding claims, wherein said roller (102) is freely rotatable within said at least one induction coil (104).

## Patentansprüche

1. Tragbare Vorrichtung zum Erwärmen eines Werkstoffs, wobei die Vorrichtung Folgendes aufweist:
eine Walze (102) und einen Griff, um einem Benutzer das Ergreifen und Halten der Vorrichtung zu ermöglichen; wobei die tragbare Vorrichtung **dadurch gekennzeichnet ist, dass** die Walze mehrere darin enthaltene intelligenten Suszeptor-Drähte (200) aufweist, wobei die Betriebstemperatur der Walze (102) durch die Curietemperatur, die den intelligenten Suszeptor-Drähten (200) eigen ist, begrenzt wird; und
dadurch dass die tragbare Vorrichtung mindestens eine Induktionsspule (104) aufweist, die mit der Walze (102) gekoppelt ist, wobei die mindestens eine Induktionsspule (104) konfiguriert ist, ein Magnetfeld in den Suszeptor-Drähten (200) zu induzieren, um das Erhöhen einer Temperatur der Walze (102) zu erleichtern.

2. Vorrichtung nach einem der vorhergehenden Ansprüche, wobei die Suszeptor-Drähte (200) mindestens einen kontinuierlichen Suszeptor-Draht aufweisen, der sich in Umfangsrichtung innerhalb der Walze (102) erstreckt.

3. Vorrichtung nach einem der vorhergehenden Ansprüche, wobei die Suszeptor-Drähte (200) mindestens einen diskontinuierlichen Suszeptor-Draht aufweisen, der sich in Umfangsrichtung innerhalb der Walze (102) erstreckt.

4. Vorrichtung nach einem der vorhergehenden Ansprüche, wobei die Walze (102) einen hohlen zylindrischen Körper aufweist.

5. Vorrichtung nach Anspruch 4, wobei die Induktionsspule (104) in Längsrichtung um die Walze (102) gewickelt ist.

6. Vorrichtung nach einem der vorhergehenden Ansprüche, wobei die Induktionsspule (104) einen Solenoid bildet.

7. Vorrichtung nach einem der vorhergehenden Ansprüche, wobei die Walze (102) innerhalb der mindestens einen Induktionsspule (104) frei drehbar ist.

## Revendications

1. Appareil manuel pour faire chauffer un matériau, ledit appareil comprenant :
un rouleau (102) ; et
une poignée permettant à un utilisateur de saisir ou tenir l'appareil ;
l'appareil manuel étant **caractérisé en ce que** le rouleau comprend une pluralité de fils suscepteurs intelligents (200) contenus dedans, où la température de fonctionnement dudit rouleau (102) est limitée par la température de Curie intrinsèque auxdits fils suscepteurs intelligents (200) ; et
**en ce que** l'appareil manuel comprend au moins une bobine d'induction (104) couplée audit rouleau (102), ladite au moins une bobine d'induction (104) étant configurée pour induire un champ magnétique dans lesdits fils suscepteurs (200) pour faciliter l'augmentation de la température dudit rouleau (102).

2. Appareil selon l'une quelconque des revendications précédentes, dans lequel lesdits fils suscepteurs (200) comprennent au moins un fil suscepteur continu qui s'étend circonférentiellement à l'intérieur dudit rouleau (102).

3. Appareil selon l'une quelconque des revendications précédentes, dans lequel lesdits fils suscepteurs (200) comprennent au moins un fil suscepteur discontinu qui s'étend circonférentiellement à l'intérieur dudit rouleau (102).

4. Appareil selon l'une quelconque des revendications précédentes, dans lequel ledit rouleau (102) comprend un corps cylindrique creux.

5. Appareil selon la revendication 4, dans lequel ladite bobine d'induction (104) est enroulée longitudinalement autour dudit rouleau (102).

6. Appareil selon l'une quelconque des revendications précédentes, dans lequel ladite bobine d'induction (104) forme un solénoïde.

7. Appareil selon l'une quelconque des revendications précédentes, dans lequel ledit rouleau (102) peut tourner librement à l'intérieur de ladite au moins une bobine d'induction (104).
